# EUROPÄISCHE PATENTSCHRIFT

(11) **EP 3 581 336 B1**
(45) Veröffentlichungstag und Bekanntmachung des Hinweises auf die Patenterteilung: **27.09.2023**
(21) Anmeldenummer: 19178116.0
(22) Anmeldetag: 04.06.2019
(51) Int. Cl.: B25B 23/10, B21J 15/02, B21J 15/32

(54) **SETZEINRICHTUNG**
SETTING DEVICE
DISPOSITIF DE POSITIONNEMENT

(30) Priorität: 11.06.2018 DE 102018113870
(43) Veröffentlichungstag der Anmeldung: 18.12.2019
(73) Patentinhaber: Profil Verbindungstechnik GmbH & Co. KG, 61381 Friedrichsdorf (DE)
(72) Erfinder: LEBEAU, Andreas, 61381 Friedrichsdorf (DE); IRMLER, Klaus, 35415 Pohlheim (DE); LESKY, Benjamin, 61191 Rosbach vor der Höhe (DE)
(74) Vertreter: Manitz Finsterwald Patent- und Rechtsanwaltspartnerschaft mbB

(56) Entgegenhaltungen:
- EP-A2- 2 644 298
- WO-A1-94/15736
- WO-A2-2016/055891
- DE-A1-102016 224 174
- DE-C- 925 745
- US-A- 5 813 114

## Beschreibung

Die vorliegende Erfindung betrifft eine Setzeinrichtung zur Befestigung eines Elements an einem Werkstück.

Bei der Massenherstellung von Werkstücken werden häufig Setzeinrichtungen verwendet, um an diesen Elemente zu befestigen, die bestimmte Funktionen bereitstellen. Solche Elemente können zum Beispiel Mutter- oder Bolzenelemente sein, die als Befestigungspunkte für weitere Komponenten dienen. Beispielsweise kommen derartige Elemente zum Einsatz, wenn es darum geht, Befestigungselemente an Blechteilen anzubringen. Ein typischer Anwendungsbereich solcher Sitzeinrichtungen ist der Automobilbau. Aber auch in anderen Bereichen finden Sitzeinrichtungen breite Anwendung.

Die WO 94/15736 A1 offenbart beispielsweise eine Setzmaschine mit einem Nietzuführungskanal, in welchem der Nietkopf mit federbelasteten Kugeln in Eingriff gebracht wird, um den Niet mit dem Nietzuführungskanal und einem Stempel auszurichten. Ein Messfinger, welcher im Bereich des Nietzuführungskanals angeordnet ist, ist dazu ausgebildet, die Anwesenheit eines Niets in dem Nietzuführungskanal zu detektieren.

Aus der EP 2 644 298 A2 ist eine Vorrichtung zum Setzen von Befestigungsmitteln bekannt, welche eine Überwachungsschaltung umfasst, mittels welcher ein Zufuhrstatussignal eines Sensors des Zufuhrsystems für Befestigungsmittel erfasst werden kann. Mittels der Überwachungsschaltung kann ein Fehlerzustand erkannt werden.

In der DE 925 745 C ist eine Vorrichtung zum Überwachen der Nietzufuhr für automatische Nietmaschinen bekannt. Fangklauen, die auf Seiten eines Nietvorrats am Beginn einer Nietzuführung zu einer Bahn eines Nieteinführungsstempels angeordnet sind, dienen zur Detektion der Anwesenheit eines Niets am Beginn der Nietzuführung. Mit dieser Anordnung kann die Anwesenheit eines Niets am Beginn der Nietzuführung sichergestellt werden, bevor der Stempel betätigt wird.

Die DE 10 2016 224 174 A1 offenbart ein Verfahren zur Überwachung einer Stanznietvorrichtung mittels einer Schall-Messeinrichtung.

Dabei ist es für die Qualität des Werkstücks von großer Bedeutung, dass das Element zuverlässig und in kontrollierter Weise an dem Werkstück fixiert wird. Mit anderen Worten muss das Element reproduzierbar zugeführt und gegen bzw. in das Werkstück gepresst werden. Die zur Fixierung des Elements erforderliche Presskraft wird durch einen Stempel aufgebracht. Um eine exakte Heranführung und Positionierung des Elements zu ermöglichen, ist die Setzeinrichtung mit einer Führungseinrichtung versehen, die das Element während dem Heranführen und Pressen sicher und lagegetreu führt. Zu diesem Zweck weist die Führungseinrichtung einen axialen Hohlraum auf, durch den das Element in einer Setzrichtung - also auf das Werkstück zu - mittels des axial bewegbaren Stempels geführt wird. Die Führungseinrichtung weist zumindest zwei Führungselemente auf, die den Hohlraum definieren oder in radialer Richtung begrenzen. Die Führungselemente sind mittels einer Vorspanneinrichtung, die eine auf zumindest eines der Führungselemente nach radial innen - also auf eine Längsachse des Hohlraums zu - wirkende Vorspannkraft erzeugt, vorgespannt. Diese Vorspannung sorgt dafür, dass das Element ohne seitliches Spiel durch den Hohlraum geführt werden kann, was die Gefahr eines Verkantens des Elements minimiert. Die zumindest zwei Führungselemente sind zumindest abschnittsweise relativ zueinander bewegbar. Bevorzugt sind sie separat ausgebildet. In bestimmten Fällen ist es jedoch auch möglich, die Führungselemente einstückig miteinander auszubilden, wobei eine (elastische) Verbiegbarkeit der Elemente relativ zueinander zugelassen wird. Man denke in diesem Zusammenhang beispielsweise an zwei Halbschalen, die an einer ihrer jeweiligen Längsseiten miteinander (z.B. einstückig) verbunden sind und so eine Art Klammer oder Ring mit Schlitz bilden. Es ist auch möglich, einen Abschnitt einer die Führungseinrichtung aufnehmenden Komponente der Setzeinrichtung als Führungselement zu nutzen und zumindest ein zweites, in radialer Richtung nach innen vorgespanntes Führungselement vorzusehen. Beispielsweise drückt das vorgespannte Führungselement das zu setzende Befestigungselement bei seiner Bewegung durch den Hohlraum gegen einen Abschnitt einer Innenfläche eines Gehäusebauteils, dass die Führungseinrichtung aufnimmt.

Derartige Setzeinrichtungen sind grundsätzlich bekannt. Es können jedoch Fehlfunktionen auftreten, etwa wenn das Element nicht korrekt zugeführt wird. Derartige Fehlfunktionen führen zu mangelhaften Werkstücken und/oder Produktionsausfällen, die mit erheblichen Kosten verbunden sind.

Es ist daher eine Aufgabe der vorliegenden Erfindung, eine kostengünstige und zuverlässige Setzeinrichtung der eingangs genannten Art zu schaffen, die Fehlfunktionen erkennt.

Die Lösung dieser Aufgabe erfolgt durch eine Setzeinrichtung mit den Merkmalen des Anspruchs 1.

Erfindungsgemäß ist der Führungseinrichtung eine Detektionseinrichtung zugeordnet, mit der eine Anwesenheit, Position und/oder Lage eines Elements im Bereich der Führungseinrichtung detektierbar ist. Mit anderen Worten ermöglicht es die Detektionseinrichtung, das Heranführen des Elements zu überwachen bzw. Festzustellen, ob und ggf. wie das Element dem Werkstück zugeführt wird. Im Falle einer Fehlfunktion können frühzeitig Warnsignale ausgegeben werden und/oder Gegenmaßnahmen eingeleitet werden (z.B. Notstopp oder Verhinderung eines Wiederanfahrens des Setzvorgangs).

Vorteilhafte Weiterbildungen der vorliegenden Erfindung sind in den Ansprüchen, der Beschreibung sowie den beigefügten Zeichnungen angegeben.

Gemäß einer Ausführungsform weist die Detektionseinrichtung ein elektrisches Wirkprinzip, insbesondere ein kapazitives, induktives und/oder resistives Wirkprinzip, und/oder ein optisches und/oder magnetisches und/oder akustisches Wirkprinzip auf und/oder umfasst einen Kraft- und/oder Drucksensor. Verschiedene Sensortypen und/oder Detektoren können kombiniert werden, um die Erfassung des Elements zu optimieren.

Erfindungsgemäß ist die Detektionseinrichtung zumindest teilweise in zumindest eines der Führungselemente integriert. Zusätzlich oder alternativ kann zumindest ein Messabgriff oder Sensor der Detektionseinrichtung in Setzrichtung gesehen in einem Wirkbereich der Führungseinrichtung angeordnet sein. Dies ermöglicht eine direkte oder indirekte Beobachtung des Elements im Bereich der Führungseinrichtung.

Die Detektionseinrichtung umfasst ein erstes Kontaktelement, das an einer Innenseite des ersten Führungselements vorgesehen ist, und ein zweites Kontaktelement, das an einer Innenseite des zweiten Führungselements vorgesehen ist, wobei die Kontaktelemente bei der Bewegung des Elements durch den Hohlraum mit diesem zumindest abschnittsweise in Kontakt bringbar sind bzw. zumindest zeitweise in Kontakt stehen und wobei mittels der Detektionseinrichtung eine elektrische Spannung und/oder ein elektrischer Strom zwischen den Kontaktelementen anlegbar ist. Eine Messung des Strom, der Spannung bzw. des Widerstands zwischen den Kontaktelementen ermöglicht es auf einfache Weise, die Anwesenheit - und bei entsprechender Ausgestaltung der Kontaktelemente auch die Position oder Lage - des Elements zu erfassen. Grundsätzlich ist es möglich, mehr als zwei Kontaktelemente vorzusehen, beispielsweise zwei oder mehr Kontaktelemente je Führungselement, insbesondere wobei die Kontaktelemente in in Setzrichtung axial versetzten Abschnitten angeordnet und separat ansteuerbar sind, um eine axiale Position, Lage und/oder axiale Bewegung des Elements zu erfassen. Die Führungselemente selbst können die Kontaktelemente bilden, d.h. eine Innenfläche der Führungselemente bildet die Kontaktelemente.

Die Detektionseinrichtung kann zumindest einen Magnetfeldsensor umfassen, insbesondere einen Hall-Sensor. Dieser ermöglicht die Erfassung eines Elements mit para- oder permanentmagnetischen Eigenschaften. Es ist auch denkbar, zumindest eine Magnetfeldquelle (z.B. eine oder mehrere Spulen und/oder Permanentmagneten) vorzusehen und die Veränderungen des erzeugten Magnetfelds durch die Anwesenheit und/oder Bewegung des Elements durch einen oder mehrere Magnetfeldsensoren zu erfassen und auszuwerten. Bei geeigneter Ausgestaltung des erzeugten Magnetfelds und entsprechender Anordnung des Sensors bzw. der Sensoren ist es möglich, eine axiale Position, Lage und/oder axiale Bewegung des Elements zu erfassen. Grundsätzlich lässt sich diese Prinzip auch mit elektrischen Feldern und entsprechenden Sensoren realisieren.

Gemäß einer weiteren Ausführungsform umfasst die Detektionseinrichtung zumindest eine Messspule, insbesondere wobei die Messspule koaxial zu dem Hohlraum angeordnet ist. Die Anwesenheit eines Elements ändert die Induktivität der Messspule, was durch bekannte Messverfahren ohne weiteres erkannt werden kann. Eine zeitliche Änderung der Induktivität gibt auch Aufschluss über die Bewegung des Elements.

Denkbar ist auch, dass die Detektionseinrichtung zumindest einen Piezo-Aufnehmer und/oder zumindest einen Dehnungsmesstreifen umfasst, mittels dem eine auf zumindest eines der Führungselemente und/oder eine zwischen den Führungselementen wirkende Kraft erfassbar ist.

Zusätzlich oder alternativ kann die Detektionseinrichtung zumindest einen Bewegungs- oder Abstandssensor umfassen, mit dem eine Bewegung der Führungseinrichtung und/oder zumindest eines der Führungselemente erfassbar ist, insbesondere wobei eine Bewegung und/oder eine Abstandsänderung des zumindest einen der Führungselemente relativ zu einer anderen Komponente der Setzeinrichtung und/oder eine Bewegung und/oder eine Abstandsänderung der Führungselemente relativ zueinander erfassbar ist. Mittels eines Bewegungssensors ist es beispielsweise möglich, die Änderung einer Eigenfrequenz der Führungseinrichtung durch die Anwesenheit des Elements zu erfassen. Zur Umsetzung dieses Messprinzips kann eine angeregte Schwingung vorgesehen sein, die mittels einer entsprechenden Schwingungsquelle bewusst erzeugt wird. Es ist aber auch möglich, die bei normalem Betrieb der Setzeinrichtung auftretende Schwingungen/Vibrationen zu analysieren.

Die Detektionseinrichtung kann zumindest eine Schallquelle und zumindest einen Schallsensor umfassen. Die Anwesenheit oder Lage des Elements kann durch die Erfassung einer Änderung des Schallmusters und/oder die Erfassung von an dem Element reflektierten und/oder durch das Element transmittierten Schallwellen ermittelt werden.

Gemäß einer weiteren Ausführungsform umfasst die Detektionseinrichtung zumindest eine Druckluftquelle und zumindest einen Drucksensor. Beispielsweise wird in den Hohlraum Druckluft eingeführt und mittels eines Drucksensors ein Druck im Bereich des Hohlraums ermittelt. Der gemessene Druck hängt davon ab, ob und gegebenenfalls wo sich das Element in dem Hohlraum befindet. Die Detektion des Elements erfolgt somit letztlich über eine Druckmessung bzw. eine Analyse des zeitlichen Druckverlaufs.

Gemäß einer einfachen und robusten Bauweise sind die Führungselemente zumindest teilweise, insbesondere vollständig aus einem elektrisch leitfähigen Material gefertigt, bevorzugt aus Metall.

Insbesondere sind in Umfangsrichtung benachbarte Führungselemente durch zumindest eine Unterbrechung voneinander getrennt, beispielsweise durch einen Schlitz.

Die Führungselemente können durch zumindest ein die Unterbrechung überbrückendes Verbindungselement miteinander verbunden sein, insbesondere wobei das Verbindungselement einen elektrischen Leiter und/oder einen Druck-, Kraft- und/oder Abstandssensor umfasst. Werden die Führungselemente durch die Anwesenheit des Elements auseinandergedrückt, so kann es zu einer Vergrößerung der Unterbrechung kommen, die wiederum einen Einfluss auf das Verbindungselement hat. Dieser Einfluss stellt eine Messgröße dar, deren Auswertung Aussagen über den Zustand der Setzeinrichtung bzw. die Anwesenheit und/oder Lage des Elements ermöglicht.

Die Führungselemente können voneinander elektrisch isoliert sein. Dies ist insbesondere dann von Vorteil, wenn die Führungselemente (oder Teile davon) selbst als elektrische Kontakte wirken.

In der Unterbrechung kann jeweils zumindest ein Isolierelement angeordnet sein, insbesondere wobei das Isolierelement ein elektrisch isolierendes und/der elastisches Material umfasst oder vollständig daraus gefertigt ist. Die Detektionseinrichtung kann zumindest teilweise in der Unterbrechung angeordnet sein und/oder - falls vorhanden - in das Isolierelement integriert sein.

Gemäß einer konstruktiv vorteilhaften Ausführungsform umfasst die Vorspanneinrichtung zumindest ein (zumindest abschnittsweise) elastisches Vorspannelement (z.B. ein zumindest teilweise, insbesondere vollständig aus einem Elastomer bestehendes Vorspannelement), das die Führungselemente an ihrer radialen Außenseite (direkt anliegend oder mittelbar) in Umfangsrichtung umgibt. Es kann beispielsweise ein in Umfangsrichtung geschlossenes, insbesondere ringförmiges elastisches Vorspannelement umfassen. Das Vorspannelement kann mit zumindest einem der Isolierelemente in Verbindung stehen. Bevorzug ist es einstückig mit diesem ausgebildet oder an dieses angeformt (oder umgekehrt).

Das Vorspannelement und/oder das Isolierelement können ein an zumindest eines der Führungselemente angeformtes Elastomer umfassen. Eine derartige Ausgestaltung ist kostengünstig herzustellen und liefert überraschenderweise eine reproduzierbare und hinreichend große Vorspannkraft.

Die Vorspanneinrichtung kann einen Anlageabschnitt aufweist, der an der Führungseinrichtung angeordnet, insbesondere befestigt oder angeformt ist und in zumindest einem Abschnitt der Führungseinrichtung in radialer Richtung über einer Außenkontur der Führungselemente hinausragt, um einen Abstützpunkt zur radialen Abstützung der Führungsrichtung zu bilden. Alternativ oder zusätzlich kann eine die Führungseinrichtung aufnehmende Komponente der Setzeinrichtung, insbesondere ein Gehäuseabschnitt, zumindest einen nach innen ragenden Anlageabschnitt aufweisen, der an der Komponenten angeordnet, insbesondere befestigt oder angeformt ist, wobei der Anlageabschnitt zumindest einen Abstützpunkt zur radialen Abstützung der Führungsrichtung bildet. Mit anderen Worten ist zumindest ein elastischer Anlageabschnitt vorgesehen, der in radialer Richtung zwischen der Führungseinrichtung und einer die Führungseinrichtung aufnehmenden Komponente, z.B. zwischen einem Führungselement und einem Gehäuseabschnitt, angeordnet ist. Der Anlageabschnitt stellt somit eine radiale Abstützung der Führungseinrichtung bereit. Er kann auch an einem die Führungselemente in Umfangsrichtung umgebenden Vorspannelement vorgesehen sein oder durch diese selbst gebildet sein oder eine eigenständige Funktionskomponente sein.

Wenn der Anlageabschnitt zumindest abschnittsweise elastisch ausgebildet ist, beispielsweise ein Elastomer umfasst, kann dieser durch eine Abstützung nach außen auch die nach innen wirkende Vorspannkraft bereitstellen. Bevorzugt wäre dann jedes Führungselement mit einem solchen elastischen Anlageabschnitt versehen. Der Anlageabschnitt kann auch an dem oder den Isolierelement(en) vorgesehen sein. Der Anlageabschnitt kann auch - zusätzlich oder alternativ - ein elektrisch isolierendes und/der elastisches Material umfassen oder vollständig daraus gefertigt sein.

Wie eingangs bereits erwähnt wurde, kann die Detektionseinrichtung zumindest zwei Detektionsabschnitte aufweisen, die in Setzrichtung und/oder in Umfangsrichtung versetzt zueinander angeordnet sind. Durch eine geeignete Ansteuerung der Abschnitte kann auf eine axiale Position und/oder Lage (z.B. Verkippung) des Elements in der Führungseinrichtung geschlossen werden. Die räumliche Auflösung der Detektionseinrichtung hängt dabei von der Anzahl und Positionierung der Detektionsabschnitte ab und kann bedarfsgerecht gewählt werden.

Gemäß einer Ausführungsform ist der Detektionseinrichtung eine Steuereinrichtung zugeordnet. Die Detektionseinrichtung kann auch mit einer (übergeordneten) Steuereinrichtung verbunden sein, mit der Signale der Detektionseinrichtung erfassbar und/oder auswertbar sind, um die Anwesenheit, Position und/oder Lage des Elements im Bereich der Führungseinrichtung zu ermitteln. Um genauere Informationen über den Fortgang des Setzens des Elements zu erhalten, kann der zeitliche Verlauf oder Änderungen der erfassten Messgrößen bzw. analysiert werden.

Nachfolgend wird die vorliegende Erfindung rein beispielhaft unter Bezugnahme auf die beigefügten Zeichnungen erläutert.

Es zeigen:
- Fig. 1: eine Setzeinrichtung in einer perspektivischen Ansicht,
- Fig. 2 bis 6: einen Querschnitt durch die Setzeinrichtung gemäß Fig. 1 in verschiedenen Betriebszuständen,
- Fig. 7: einen Querschnitt durch die Setzeinrichtung gemäß Fig. 1 bei einer Fehlfunktion,
- Fig. 8: eine Querschnitt durch eine Fußplatte der Setzeinrichtung mit einer Ausführungsform einer Führungseinrichtung,
- Fig. 9: die Komponenten der Führungseinrichtung gemäß Fig. 8 in einer Explosionsdarstellung,
- Fig. 10A bis 10D: eine weitere Ausführungsform der Führungseinrichtung in einer Perspektivansicht, einem Querschnitt bzw. zwei Längsschnitten,
- Fig. 11: eine weitere Ausführungsform der Führungseinrichtung in einer Perspektivansicht,
- Fig. 12: eine Ausführungsform der Fußplatte in einer Perspektivansicht,
- Fig. 13: einen Querschnitt durch die Fußplatte gemäß Fig. 12,
- Fig. 14A bis 14D: eine weitere Ausführungsform der Führungseinrichtung in einer Perspektivansicht, einem Querschnitt bzw. zwei Längsschnitten,
- Fig. 15A bis 15D: eine weitere Ausführungsform der Führungseinrichtung in einer Perspektivansicht, einem Querschnitt bzw. zwei Längsschnitten,
- Fig. 16 bis 18: weitere Ausführungsformen der Führungseinrichtung, wobei Figur 18 eine Ausführungsform der beanspruchten Erfindung betrifft,
- Fig. 19: eine Ausführungsform des Führungselements und
- Fig. 20 bis 22: weitere Ausführungsformen der Führungseinrichtung.

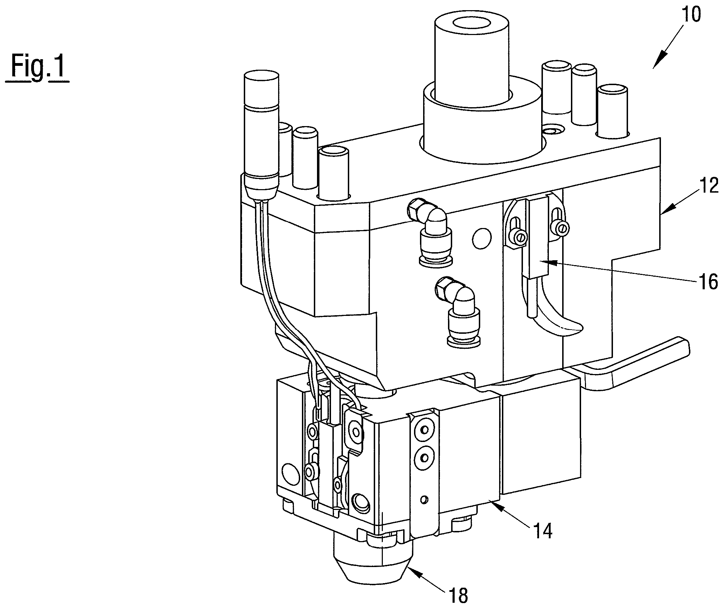

Fig. 1 zeigt eine Setzeinrichtung 10 in einer perspektivischen Ansicht. Diese umfasst ein Führungsgehäuse 12 sowie eine Führungsplatte 14. Die Setzeinrichtung 10 verfügt über einen Sensor 16, mit dem überwacht werden kann, ob sich die Setzeinrichtung 10 in einem geschlossenen oder in einem geöffneten Zustand befindet. An der Führungsplatte 14 ist eine Fußplatte 18 angeordnet, die mit einem Werkstück in Kontakt bringbar ist, um an diesem ein Befestigungselement zu befestigen.

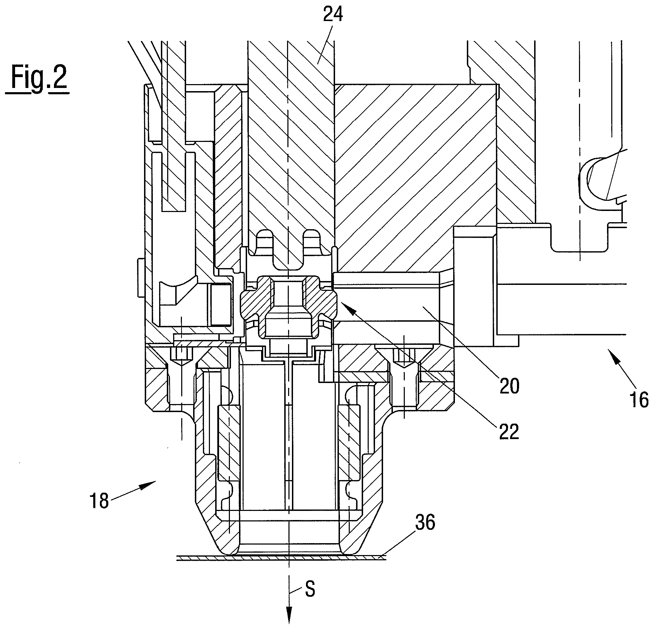

Fig. 2 zeigt einen Querschnitt durch einen Teil der Führungsplatte 14 sowie durch die Fußplatte 18. Die Führungsplatte 14 weist einen Zufuhrkanal 20 auf, durch den das an dem Werkstück zu befestigende Befestigungselement 22 in eine Position gebracht werden kann, von der es durch einen in einer Setzrichtung S bewegbaren Stempel oder Stößel 24 zu dem Werkstück hin und in dieses hinein gepresst werden kann. In Fig. 2 ist eine Ausgangssituation/-position gezeigt, in der das Element 22 mittels Haltefinger geklemmt ist. Die Setzeinrichtung 10 ist geöffnet und das Element 22 kann verarbeitet werden. Die Fußplatte 18 wurde bereits in Anlage mit einer Oberfläche eines Werkstücks 36 gebracht, an dem das Element 22 befestigt werden soll. Es versteht sich, dass das beispielhaft als Blechteil dargestellte Werkstück 36 auch anders ausgestaltet sein kann. Gleiches gilt für das Element 22.

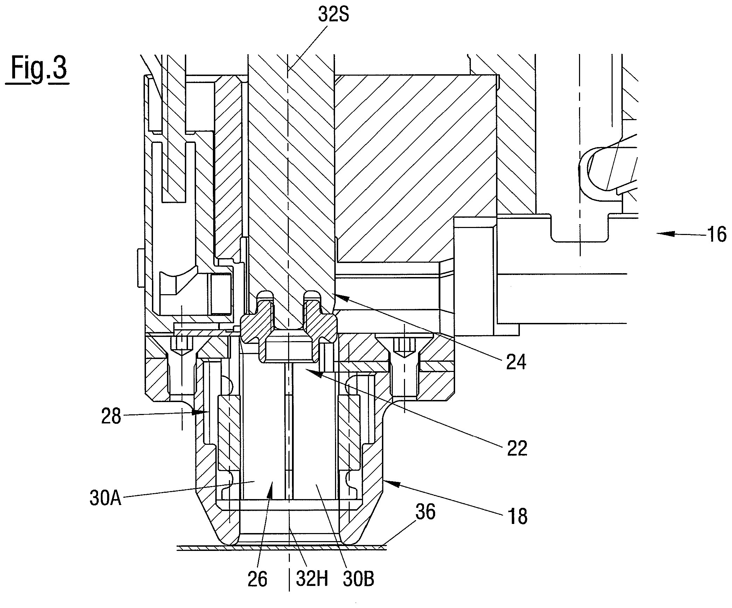

In Fig. 3 wird das Element 22 aus der Ausgangssituation kommend durch den Stempel 24 in einen kanalartigen axialen Hohlraum 26 einer Führungseinrichtung 28 der Fußplatte 18 gedrückt. Die Haltefinger werden dabei zurückgedrückt.

Die Führungseinrichtung 28 umfasst eine Mehrzahl von Führungssegmenten 30A, 30B. Die Segmente 30A, 30B sind durch einen Schlitz 39 voneinander getrennte, separate Bauteile, die jeweils einen kreissegmentartigen Querschnitt aufweisen und derart angeordnet sind, dass sie den Hohlraum 26 in Umfangsrichtung begrenzen. Sie sind durch eine nicht im Detail gezeigte Vorspanneinrichtung in einer Richtung zu einer Längsachse 32H des Hohlraums 26, die koaxial mit einer Längsachse 32S des Stempels 24 angeordnet ist, hin vorgespannt, also nach radial innen. Sobald das Element 22 in den Hohlraum 26 eintritt, werden die Segmente 30A, 30B gegen die durch die Vorspanneinrichtung erzeugte Vorspannkraft nach außen gedrückt.

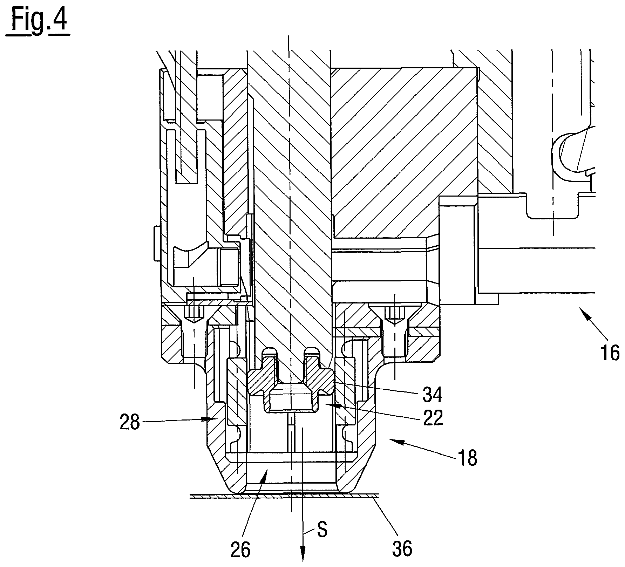

Fig. 4 zeigt, wie das Element 22 durch den Hohlraum 26 der Führungseinrichtung 28 geschoben wird. Dabei wirkt eine Umfangsfläche 34 des Elements 22 mit den Segmenten 30A, 30B zusammen. Durch die Vorspannkraft wird eine zuverlässige Führung des Elements 22 sichergestellt, da die Gefahr eines Verkippens oder Verkantens des Elements 22 minimiert wird.

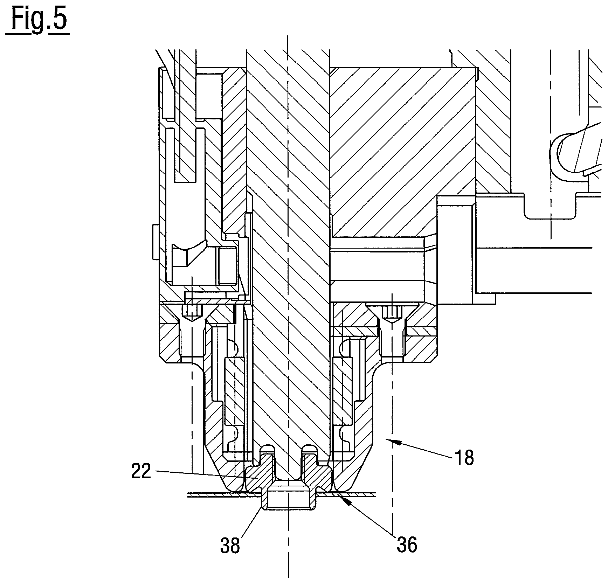

Fig. 5 zeigt, wie das Element 22 in das nur angedeutete Werkstück 36 eingepresst wird. Das Element 22 ist ein selbststanzendes Element. Der Einfachheit halber ist ein Umformen eines Nietabschnitts 38 des Elements 22 nicht gezeigt, dass durch die Wirkung einer nicht gezeigten Matrize bewirkt werden kann. Beispielsweise hintergreift der umgeformte Nietabschnitt 38 das Werkstück 38 an dessen Rückseite. Ein nicht gezeigter Stanzbutzen wurde entfernt. Der Vollständigkeit halber wird darauf hingewiesen, dass die Setzeinrichtung 10 grundsätzlich auch bei nichtselbststanzenden Elementen 22 zum Einsatz gelangen kann. Das Werkstück 36 ist dann in geeigneter Weise vorgelocht.

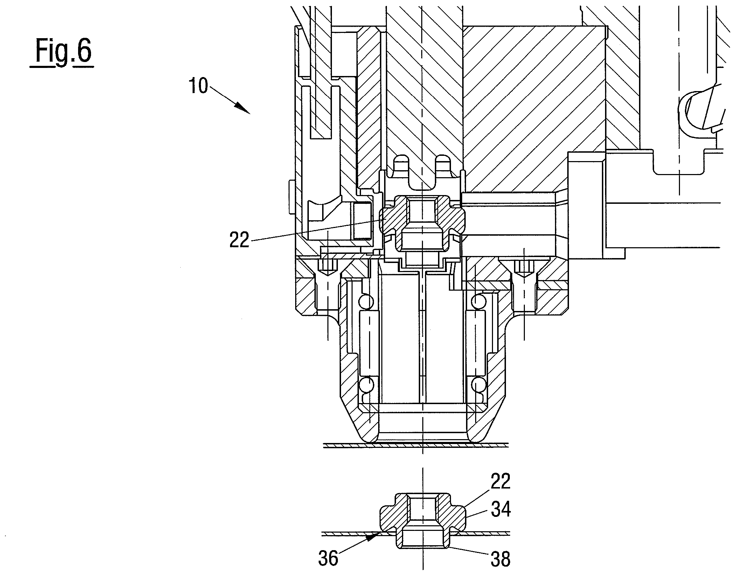

Fig. 6 zeigt den "Normalfall": Nach dem Befestigen des Elements 22 an dem Werkstück 36 wird die Setzeinrichtung 10 von diesem entfernt und in eine neue Setzposition gebracht. Dies kann durch eine Bewegung der Setzeinrichtung 10 oder eine Bewegung des Werkstücks 36 erfolgen. Es können auch sowohl die Setzeinrichtung 10 als auch das Werkstück 36 bewegt werden bzw. ein neues Werkstück 36 herangeführt werden. Ein neues Element 22 wurde bereits in die Ausgangsposition gebracht, die auch in Fig. 2 bereits gezeigt wurde.

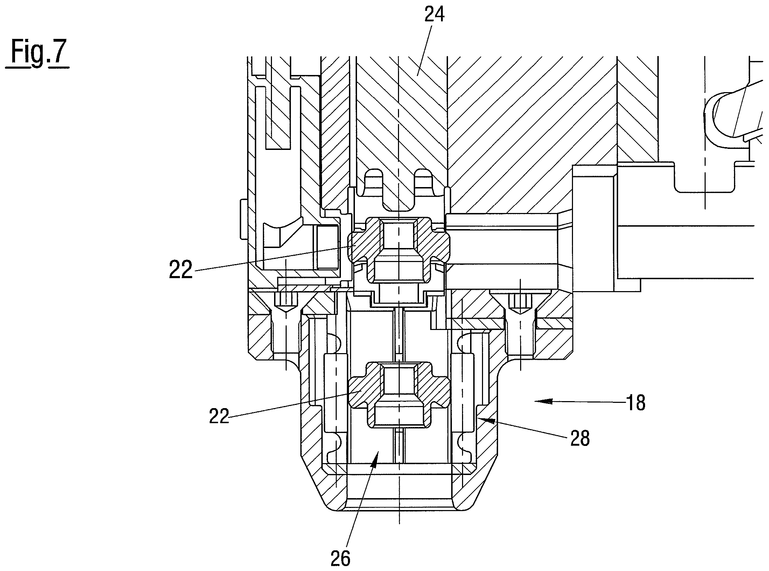

Fig. 7 zeigt eine Fehlfunktion der Setzeinrichtung 10. Das erste Element 22 befindet sich noch im Bereich der Führungseinrichtung 28, beispielsweise weil es sich dort verkantet hat, und blockiert den zur Führung des Elements 22 vorgesehenen Hohlraum 26. Das zweite, bereits in die Ausgangsposition gebrachte Element 22 würde nun durch den Stempel 24 gegen das erste Element 22 gedrückt werden, was mit großer Wahrscheinlichkeit eine Beschädigung der Setzeinrichtung 10, insbesondere der Führungseinrichtung 28, zur Folge hätte.

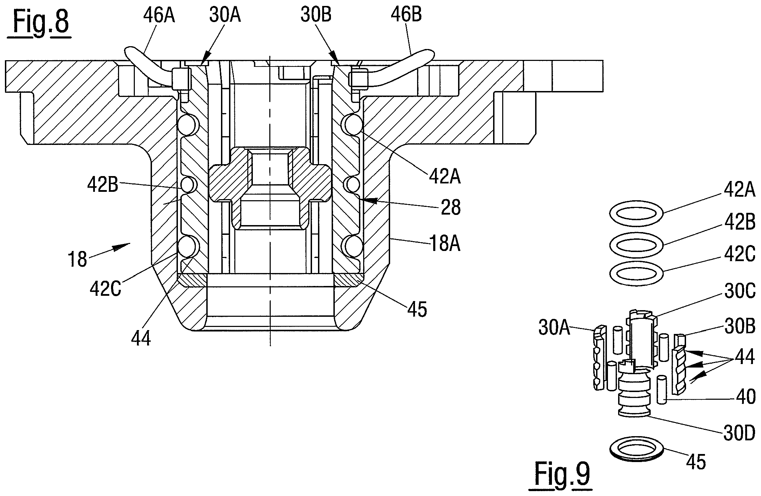

Um diese Fehlfunktion zu erkennen, ist eine Detektionseinrichtung vorgesehen, mittels derer die Anwesenheit eines Elements 22 in dem Hohlraum 26 erfasst werden kann. Eine Ausführungsform einer solchen Detektionseinrichtung ist in Fig. 8 gezeigt. Sie ist in die Führungseinrichtung 28 integriert, deren Komponenten in Fig. 9 in einer Explosionsdarstellung gezeigt sind.

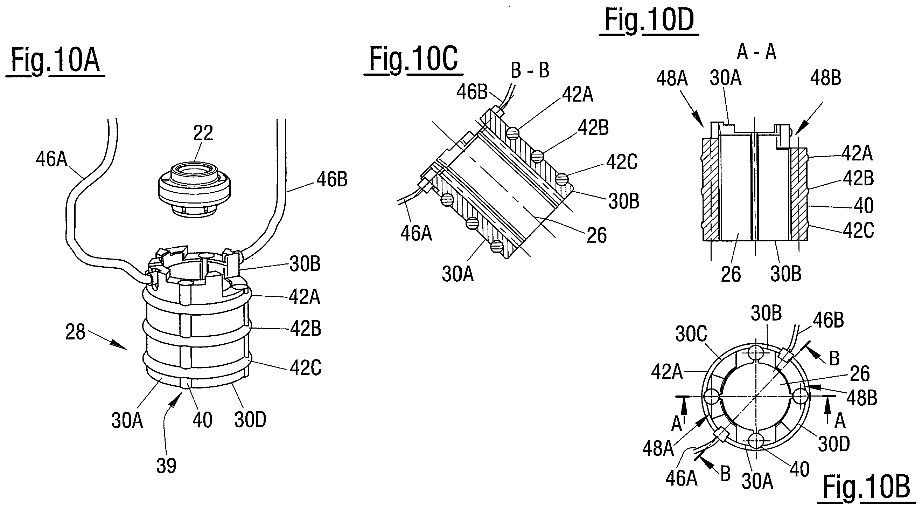

Die Führungseinrichtung 28 umfasst vier Führungssegmente 30A, 30B, 30C, 30D (bevorzugt aus Metall), die jeweils einen Umfangsabschnitt des Hohlraums 26 bilden. Sie sind voneinander durch Isolierstifte 40 getrennt, die in zwischen benachbarten Führungssegmenten 30A, 30B, 30C, 30D vorgesehenen Schlitzen 39 angeordnet sind (siehe z.B. Fig. 3, 10A, 10B). Die Isolierstifte 40 können aus einem Elastomer bestehen. Sie isolieren benachbarte Segmente 30A, 30B, 30C, 30D elektrisch und ermöglichen aufgrund ihrer elastischen Eigenschaften eine Relativbewegung der Segmente 30A, 30B, 30C, 30D. Um die eingangs beschriebene Vorspannung der Segmente 30A, 30B, 30C, 30D zu erzeugen, sind elastische Ringe 42A, 42B, 42C (z.B. O-Ringe) vorgesehen. Sie liegen in entsprechend dimensionierten Nuten 44. Durch die Ringe 42A, 42B, 42C werden die Segmente 30A, 30B, 30C, 30D nach radial innen gegen die elastischen Isolierstifte 40 vorgespannt. Durch ein Einbringen eines Elements 22 in den Hohlraum 26 werden die Ringe 42A, 42B, 42C gedehnt. Letztlich wird dadurch eine in radialer Richtung auf das Element 22 wirkende Kraft erzeugt, die Lage des Elements 22 stabilisiert.

Wie in Fig. 8 zu sehen ist, sind die elektrisch leitfähigen Segmente 30A und 30B mit elektrischen Leitern 46A, 46B verbunden. Diese erlauben es, mittels einer Steuereinrichtung zwischen den Elementen 30A, 30B eine Spannung anzulegen. Wenn das Element 22 elektrisch leitend ist, schließt es die Segmente 30A, 30B kurz, sobald es in den Hohlraum 26 eintritt, so dass ein Strom fließen kann, was von der der Steuereinrichtung erfasst wird. Grundsätzlich ist es auch möglich, die Anwesenheit des Elements 22 in analoger Weise über eine Widerstandsmessung oder andere elektrische Parameter zu bestimmen.

Bei der in den Figuren 8 und 9 gezeigten Ausführungsform sind vier Segmente 30A, 30B, 30C, 30D vorgesehen, von denen zwei (30 A und 30 B) als elektrische Kontakte wirken. Es versteht sich, dass die Anzahl der vorgesehenen Führungssegmente und die Art der Kontaktierung (z.B. Kontakt-Paarung) bedarfsgerecht gewählt werden kann. Ferner ist es möglich, nicht einzelne Führungssegmente selbst als elektrische Kontakte zu verwenden, sondern nur Abschnitte eines der Segmente bzw. mehrere Segmente mit elektrischen Kontakten zu versehen.

Eine axiale Abstützung der Führungseinrichtung 28 bzw. der Segmente 30A, 30B, 30C, 30D in einem Gehäuse 18A der Platte 18 erfolgt über einen elektrisch isolierenden Stützring 45. Eine radiale Abstützung kann über die Ringe 42A, 42C erfolgen, da diese zum Teil aus den Nuten 44 hinausragen und damit in radialer Richtung über die Segmente 30A, 30B, 30C, 30D überstehen.

Die Figuren 10A bis 10D zeigen eine weitere Ausführungsform der Führungseinrichtung 28, wobei Fig. 10A eine Perspektivansicht ist und die Fig. 10B bis 10D Quer- bzw. Längsschnitte sind. Die Ringe 42A, 42B, 42C und die Isolierstifte 40 sind einstückig ausgebildet. Sie können auch lediglich miteinander verbunden sein oder separate Bauteile sein. Gemäß einer besonders einfachen Ausführungsform werden die vorstehend genannten Komponenten an die Segmente 30A, 30B, 30C, 30D angeformt. Bevorzugte Materialien, aus dem die genannten Komponenten geformt werden können, sind elastisch verformbare Kunststoffe, insbesondere Elastomere. Beispielsweise werden diese durch Vulkanisieren eines thermoplastischen Naturkautschuks oder eines Synthesekautschuks erhalten.

Insbesondere den Fig. 10A und 10D ist zu entnehmen, dass die Segmente 30A, 30B, 30C, 30D an ihren jeweiligen Oberseiten mit Ausnehmungen 48A oder 48B versehen sind, die eine axiale Fixierung der Segmente 30A, 30B, 30C, 30D ermöglichen, was nachfolgend noch näher erläutert wird.

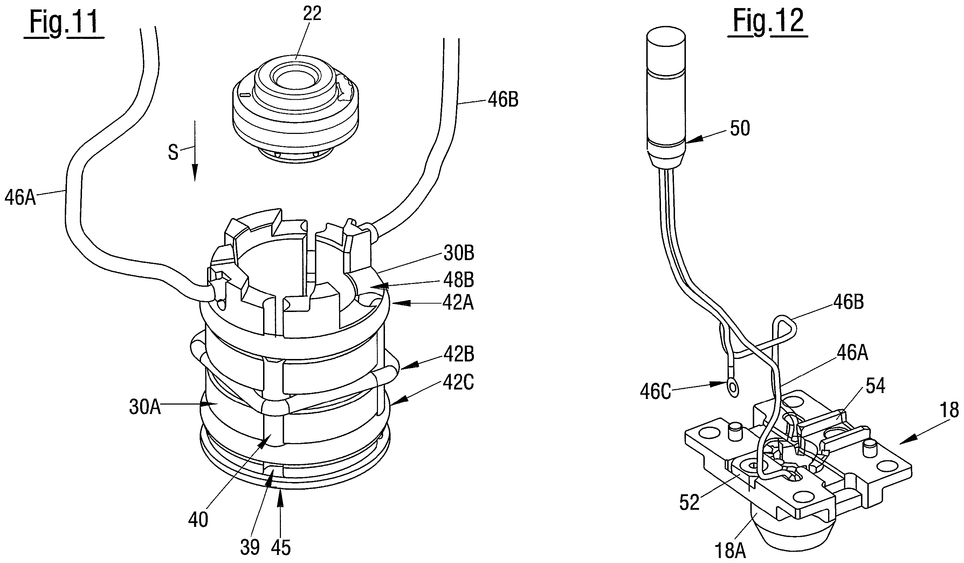

Fig. 11 zeigt eine alternative Ausführungsform der Führungseinrichtung 28. Hier sind Isolierstifte 40 vorgesehen, die sich zwischen den die Ringen 42A, 42C in axialer Richtung erstrecken, nicht aber in axialer Richtung über diese hinaus ragen. Die Schlitze 39 sind also nur teilweise ausgefüllt. Anders als dargestellt können diese Komponenten einstückig ausgebildet sein. Der in axialer Richtung zwischen den Ringen 42A, 42C liegende Ring 42B weist eine im Wesentlichen quadratische Grundform auf und umgreift die Isolierstifte 40 von außen, um eine zusätzliche Vorspannung zu erzeugen.

Fig. 12 zeigt die Führungseinrichtung 28 der Fig. 11 in einem in der Fußplatte 18 montierten Zustand. Die Leiter 46A, 46B sind über einen mehrpoligen Stecker 50 mit einer nicht näher dargestellten Steuereinrichtung verbunden. Über den Stecker 50 wird auch eine elektrische Verbindung zu der Führungsplatte 14 hergestellt (siehe Leiter 46C). Von oben werden die Segmente 30A, 30B, 30C, 30D durch ein Fixierelement 52 und eine Zufuhrschiene 54 in dem Gehäuse 18A der Fußplatte 18 fixiert. Die Zufuhrschiene 54 bildet einen Teil des Kanals 20 (siehe Fig. 2).

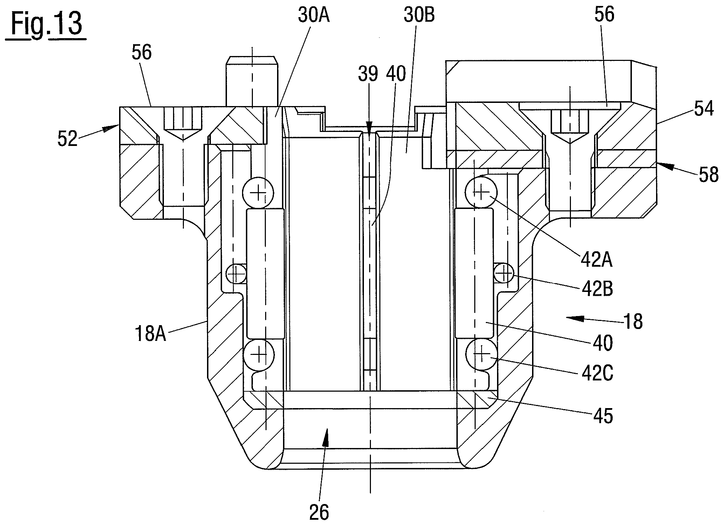

Fig. 13 zeigt die Fußplatte 18 in einer Schnittansicht. Zu erkennen ist die axiale Fixierung der Führungseinrichtung 28 durch das Fixierelement 52 und die Zufuhrschiene 54. Das Fixierelement 52 ist aus isolierendem Material gefertigt und kann daher in direktem Kontakt mit dem Segment 30A stehen. Es ist mit dem Gehäuse 18A mittels einer Schraube 56 verschraubt. Die Zufuhrschiene 54, die bei dem Heranführen des Elements 22 in die Ausgangsposition eine Rolle spielt, ist dahingegen mittels einer Isolierplatte 58 gegenüber dem Segment 30B isoliert. Das Fixierelement 52 und die Zufuhrschiene 54 greifen in die Ausnehmungen 48A bzw. 48B ein. Die Komponenten 52, 54 können aus Kunststoff sein.

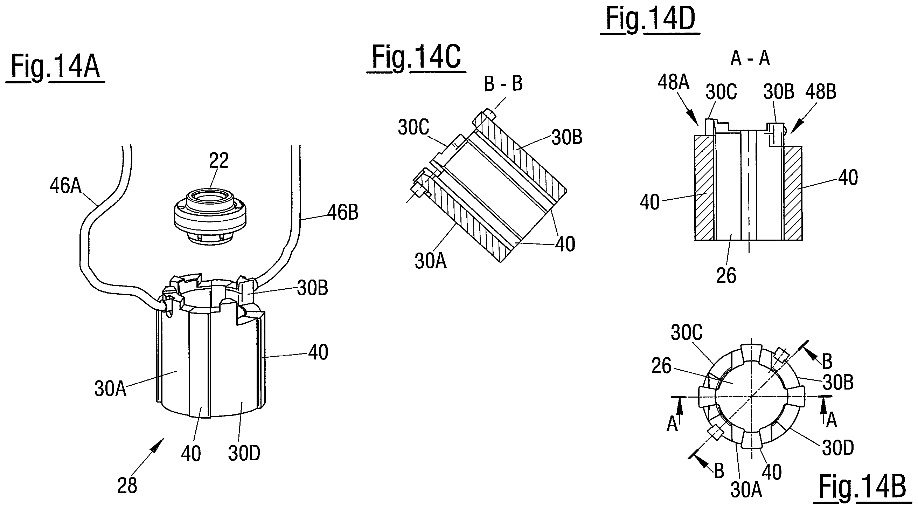

Die Figuren 14A bis 14D zeigen eine weitere Ausführungsform der Führungseinrichtung 28, wobei Fig. 14A eine Perspektivansicht ist und die Fig. 14B bis 14D Quer- bzw. Längsschnitte sind. Anstelle der Isolierstifte 40 der Ausführungsformen gemäß den Fig. 8, 9 und 10A bis 10D mit im Wesentlichen kreisrundem Querschnitt sind in den Schlitzen 39 zwischen benachbarten Segmenten 30A, 30B, 30C, 30D Isolierstifte 40 mit in etwa trapezförmigem Querschnitt angeordnet. Die Isolierstifte 40 ragen in radialer Richtung außen über die Segmente 30A, 30B, 30C, 30D hinaus, so dass sie eine Abstützung der Führungseinrichtung 28 in dem Gehäuse 18 A ermöglichen. Mit anderen Worten dienen die Isolierstifte 40 nicht nur zur elektrischen Isolierung der Segmente 30A, 30B, 30C, 30D gegeneinander, sondern sie dienen auch zu deren radialen Abstützung. Die elastischen Eigenschaften der Isolierstifte 40 sorgen - bei geeigneter Dimensionierung des radialen Überstands - für die gewünschte Vorspannung auf die Segmente 30A, 30B, 30C, 30D. Die radialen Innenseiten der Isolierstifte 40 sind gegenüber den Innenseiten der Segmente 30A, 30B, 30C, 30D zurückversetzt, um die Bewegung des Elements 22 durch den Hohlraum 26 nicht zu behindern. Die Isolierstifte 40 können separate Bauteile sein oder an die Segmente 30A, 30B, 30C, 30D angeformt sein. Bevorzugt bestehen sie aus einem Elastomer.

Das Konzept, durch in radialer Richtung nach außen überstehende Elemente mit elastischen Eigenschaften eine Vorspanneinrichtung zu schaffen, lässt sich grundsätzlich auch losgelöst von den Isolierstifte 40 realisieren. Beispielsweise ist es - zusätzlich oder alternativ - möglich, an den Außenseiten der Segmente 30A, 30B, 30C, 30D elastische Anschlagabschnitte vorzusehen oder anzuformen, die sich in dem Gehäuse 18A abstützen. Umgekehrt können auch - zusätzlich oder alternativ - an dem Gehäuse 18A nach radial innen ragende elastische Anlageabschnitte vorgesehen sein, die zur radialen Abstützung der Führungseinrichtung 28 dienen. Die Anlageabschnitte können an der Führungseinrichtung 28 und/oder dem Gehäuse 18A befestigt oder an diese angeformt sein oder separate Bauteile sein.

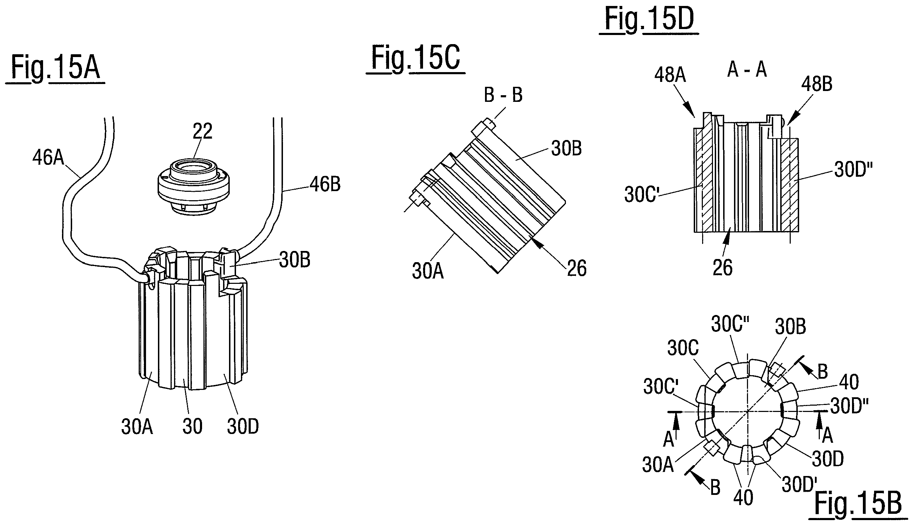

Die Figuren 15A bis 15D zeigen eine weitere Ausführungsform der Führungseinrichtung 28, wobei Fig. 15A eine Perspektivansicht ist und die Fig. 15B bis 15D Quer- bzw. Längsschnitte sind. Anstelle der Segmente 30A, 30B, 30C, 30D sind Segmente 30A, 30B, 30C, 30C', 30C", 30D, 30D', 30D" vorgesehen, zwischen denen jeweils in einem entsprechenden Schlitz 39 ein Isolierstift 40 angeordnet ist. Dies zeigt, dass grundsätzlich eine beliebige Anzahl von Führungssegmenten vorgesehen sein kann, um den jeweils vorliegenden Anforderungen bestmöglich Rechnung zu tragen. Gleiches gilt für die Anzahl und Ausgestaltung der Isolierstifte. Sie können die Unterbrechungen zwischen den Führungssegmenten vollständig oder auch nur teilweise ausfüllen und grundsätzlich eine beliebige, bedarfsgerechte Ausgestaltung (z.B. Querschnittsgeometrie) aufweisen.

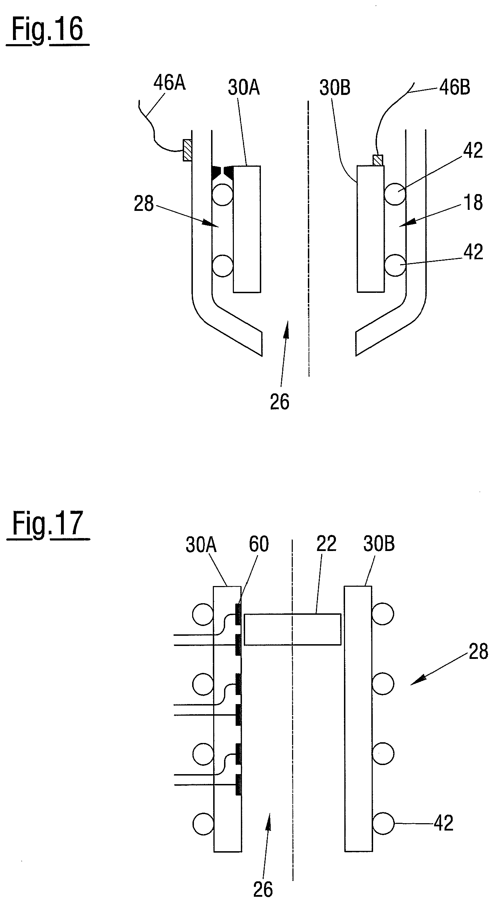

Fig. 16 zeigt eine Ausführungsform der Führungseinrichtung 28, bei der das Segment 30B (wie in den vorstehend beschriebenen Ausführungsformen) direkt mit einem Leiter 46B verbunden ist. Wird ein Element 22 in den Hohlraum 26 eingeführt, so drückt er die Segmente 30A, 30B gegen die durch die Ringe 42 erzeugte Vorspannung auseinander. Dadurch gelangt eine Kontaktstelle 59A, die an dem Segment 30A vorgesehen ist, mit einer Kontaktstelle 59B in Kontakt, die an dem Gehäuse 18A vorgesehen ist. Das Gehäuse 18A ist wiederum mit dem Leiter 46A verbunden. Auch in diesem Fall wird durch das Element 22 somit ein Stromkreis geschlossen, wobei aber eine durch einen Abstand der Kontaktstellen 59A, 59B in einem Grundzustand festgelegte minimale Relativbewegung der Segmente 30A, 30B hinzukommen muss, um letztlich das Schließen des Stromkreises zu bewirken.

Fig. 17 zeigt eine Detektionseinrichtung, bei der das Segment 30A eine Mehrzahl von Detektorelementen 60 - beispielsweise Kontaktflächen - aufweist, die jeweils paarweise miteinander in Verbindung stehen. Befindet sich das Element 22 in einer Position, in der die beiden Kontaktflächen 60 eines in Verbindung stehenden Paares mit ihm in Kontakt stehen, so wird wieder ein Stromkreis geschlossen, was eine Bestimmung der Position des Elements 22 in dem Hohlraum 26 ermöglicht. In

Fig. 17 wird diese Situation beispielhaft anhand der Lage des Elements 22 verdeutlicht, durch das die beiden obersten Detektorelemente 60 kurzgeschlossen. Anstelle der Kontaktflächen 60 können auch andere Sensoren und/oder Signalquellen vorgesehen sein, die auch nicht zwingend paarweise miteinander funktionell gekoppelt sein müssen. Beispielsweise können Schallquellen und Schallsensoren vorgesehen sein, die eine Reflexion von Schallwellen an dem Element 22 erfassen. Die Detektorelemente 60 können auch Bewegungs- oder Vibrationssensoren sein, um Veränderungen des Schwingungs-/Vibrationsmusters oder der Eigenschwingung der Führungseinrichtung 28 oder der Fußplatte 18 (die Elemente 60 - oder zumindest ein Element 60 - können dann auch innen oder außen an dem Gehäuse 18A angebracht sein) zu erfassen, die durch die Anwesenheit / Lage / Position eines Elements 22 in dem Hohlraum verursacht wird. Die Detektorelemente 60 können auch optische oder magnetische Sensoren oder Drucksensoren oder Sensoren anderen Typs sein (z.B. eingebettete Messspulen).

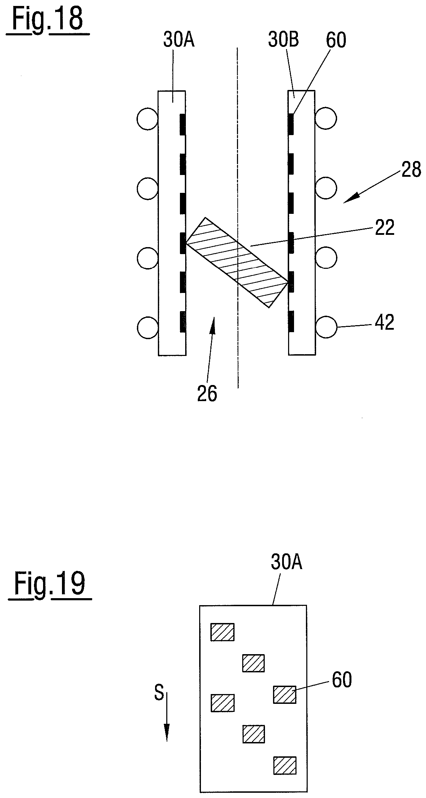

Fig. 18 zeigt eine Ausführungsform der Führungseinrichtung 28 gemäß der beanspruchten Erfindung. Hier sind sowohl an dem Segment 30A als auch an dem Segment 30B Detektorelemente 60 vorgesehen. Diese können beispielsweise derart miteinander gekoppelt sein, dass gegenüberliegende Detektorelemente 60 eine Paarung bilden, die zur Erzeugung eines Signals dienen (z.B. Kontaktflächen-Paar oder Sender-Empfänger-Paar). Es ist aber auch möglich, die einzelnen Elemente 60 einzeln oder in Gruppen anzusteuern und/oder zu überwachen, um ein genaueres Bild der Position des Elements 22 und/oder seiner Lage im Raum zu erhalten. In Fig. 18 wurde beispielhaft ein verkipptes Element 22 eingezeichnet, das aufgrund seiner Lage mit zwei nicht einander gegenüber liegenden Detektorelementen/Kontaktflächen 60 in Kontakt steht und so einen Stromkreis zwischen diesen Elementen 60 schließt, was von der Steuereinrichtung erkannt und als Fehlfunktion interpretiert wird.

Fig. 19 zeigt eine Draufsicht auf ein Führungssegment 30A mit mehreren Detektorelementen 60, die nicht nur in axialer Richtung (vgl. Setzrichtung S) sondern auch in Umfangsrichtung verteilt angeordnet sind.

Anhand der Fig. 17 bis 19 wird deutlich, dass eine Anzahl, Anordnung und funktionale Gruppierung von Detektorelementen 60 ganz nach Bedarf (insbesondere im Hinblick auf die gewünschte räumliche Auflösung der Elementdetektion) gewählt werden kann. Auch der Typ der eingesetzten Detektorelemente (u.a. elektrische Messung - z.B. Spannung, Strom, Widerstand -, Messung akustischer Signale, Messung von Vibrationen und/oder von Bewegungen und/oder Abständen, Messung optischer Signale, Messung mechanischer Parameter - z.B. Druck und/oder Spannung) ist grundsätzlich frei wählbar. Unterschiedliche Detektortypen können auch kombiniert werden, um eine für den jeweiligen Anwendungsfall geeignete Detektionseinrichtung zu schaffen. Die beanspruchte Erfindung ist diesbezüglich zumindest durch die Merkmale des Anspruchs 1 gekennzeichnet.

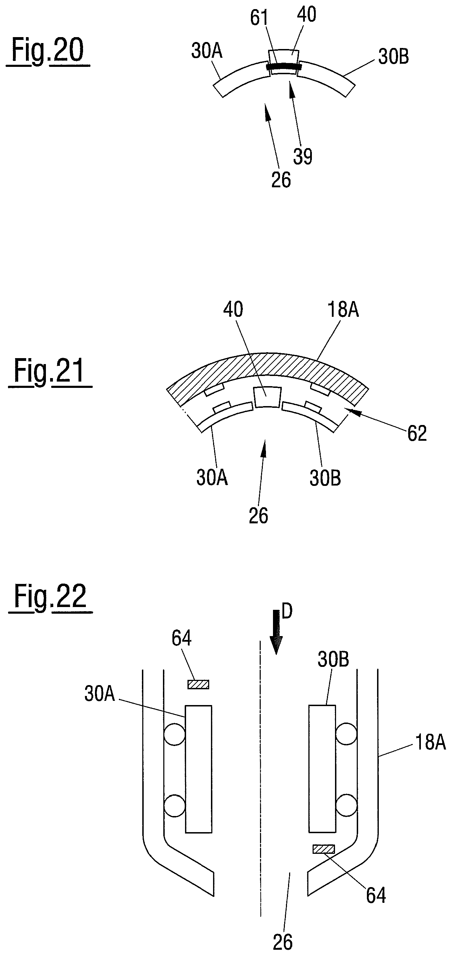

Fig. 20 zeigt eine Ausführungsform einer Detektionseinrichtung, die auf der Messung einer Abstandsänderung zwischen den Segmenten 30A, 30B basiert. Zu diesem Zweck ist ein als Messeinrichtung dienendes Verbindungselement 61 vorgesehen, dass den Schlitz 39 überbrückt und die beiden Segmente 30A, 30B miteinander verbindet. Dies kann beispielsweise ein elektrischer Leiter, dessen elektrischen Eigenschaften durch eine Längenänderung beeinflusst werden, bzw. ein Dehnungsmessstreifen sein.

Es ist auch möglich, zusätzlich oder alternativ eine Änderung des Abstands zwischen den Segmenten 30A, 30B und dem Gehäuse 18A zu erfassen und auszuwerten. Zu diesem Zweck sind beispielsweise Abstandssensoren 62 (z.B. kapazitive Sensoren) vorgesehen, die in Fig. 21 gezeigt sind. Zusätzlich oder alternativ zu den Abstandssensoren 62 können auch Dehnungsmessstreifen oder Piezo-Aufnehmer vorgesehen sein.

Fig. 22 zeigt eine Detektionseinrichtung, die auf der Messung eines Drucks im Bereich der Führungseinrichtung 28 basiert. Zu diesem Zweck wird Druckluft in den Hohlraum 26 eingebracht (siehe Pfeil D). An einer oder mehreren Stellen in dem Gehäuse 18A, insbesondere in oder benachbart zu dem Hohlraum 26, wird der sich einstellende Druck mittels entsprechender Drucksensoren 64 gemessen. Der sich an der einen Messstelle oder den mehreren Messstellen einstellende Druck hängt unter anderem davon ab, ob und gegebenenfalls wo sich ein Element 22 in dem Hohlraum 26 befindet.

### Bezugszeichenliste

- 10: Setzeinrichtung
- 12: Führungsgehäuse
- 14: Führungsplatte
- 16: Sensor
- 18: Fußplatte
- 20: Zufuhrkanal
- 22: Befestigungselement
- 24: Stößel oder Stempel
- 26: Hohlraum
- 28: Führungseinrichtung
- 30A, 30B, 30C, 30C', 30C", 30D, 30D', 30D": Führungssegment
- 32H, 32S: Längsachse
- 34: Umfangsfläche
- 36: Werkstück
- 38: Nietabschnitt
- 39: Schlitz
- 40: Isolierstift
- 42, 42A, 42B, 42C: Ring
- 44: Nut
- 45: Stützring
- 46A, 46B: Leiter
- 48A, 48B: Ausnehmung
- 50: Stecker
- 52: Fixelement
- 54: Zufuhrschiene
- 56: Schraube
- 58: Isolierplatte
- 59A, 59B: Kontaktstelle
- 60: Detektorelement
- 61: Verbindungselement
- 62: Abstandssensor
- 64: Drucksensor

- S: Setzeinrichtung
- D: Druckluft

## Patentansprüche

1. Setzeinrichtung (10) zur Befestigung eines Elements (22) an einem Werkstück (36) mit einer mit dem Element (22) in mechanischem Kontakt bringbaren Führungseinrichtung (28), die einen axialen Hohlraum (26) zum Führen des Elements (22) aufweist, und mit einem axial bewegbaren Stempel (24) zum Bewegen des Elements (22) in einer Setzrichtung durch den Hohlraum (26) der Führungseinrichtung (28), wobei die Führungseinrichtung (28) zumindest ein erstes und ein zweites Führungselement (30A, 30B, 30C, 30C', 30C", 30D, 30D', 30D") aufweist, wobei die Führungselemente (30A, 30B, 30C, 300, 30C", 30D, 30D', 30D") den axialen Hohlraum (26) begrenzen und mittels einer Vorspanneinrichtung durch eine auf zumindest eines der, insbesondere alle der Führungselement (30A, 30B, 30C, 300, 30C", 30D, 30D', 30D") nach radial innen wirkende Vorspannkraft vorgespannt sind und wobei der Führungseinrichtung (28) eine Detektionseinrichtung zugeordnet ist, mit der eine Anwesenheit, Position und/oder Lage eines Elements (22) im Bereich der Führungseinrichtung (28) detektierbar ist,
**dadurch gekennzeichnet, dass**
die Detektionseinrichtung zumindest teilweise in zumindest eines der Führungselemente (30A, 30B, 30C, 30C', 30C", 30D, 30D', 30D") integriert ist und
dass die Detektionseinrichtung ein erstes Kontaktelement (60), das an einer Innenseite des ersten Führungselements (30A) vorgesehen ist, und ein zweites Kontaktelement (60), das an einer Innenseite des zweiten Führungselements (30B) vorgesehen ist, umfasst, wobei die Kontaktelemente (60) bei der Bewegung des Elements (22) durch den Hohlraum (26) mit diesem zumindest abschnittsweise in Kontakt bringbar sind und wobei mittels der Detektionseinrichtung eine elektrische Spannung und/oder ein elektrischer Strom zwischen den Kontaktelementen (60) anlegbar ist.

2. Setzeinrichtung (10) nach Anspruch 1,
**dadurch gekennzeichnet, dass**
die Detektionseinrichtung ein elektrisches Wirkprinzip, insbesondere ein kapazitives, induktives und/oder resistives Wirkprinzip, und/oder ein optisches und/oder magnetisches und/oder akustisches Wirkprinzip aufweist und/oder einen Kraft- und oder Drucksensor (64) umfasst.

3. Setzeinrichtung (10) nach Anspruch 1 oder 2,
**dadurch gekennzeichnet, dass**
zumindest ein Messabgriff oder Sensor (46A, 46B, 59A, 59B, 60, 61, 62, 64) der Detektionseinrichtung in Setzrichtung gesehen in einem Wirkbereich der Führungseinrichtung (28) angeordnet ist.

4. Setzeinrichtung (10) nach zumindest einem der vorstehenden Ansprüche,
**dadurch gekennzeichnet, dass**
die Detektionseinrichtung zumindest einen Magnetfeldsensor, insbesondere einen Hall-Sensor umfasst, und/oder dass die Detektionseinrichtung zumindest eine Messspule umfasst, insbesondere wobei die Messspule koaxial zu dem Hohlraum (26) angeordnet ist, und/oder dass die Detektionseinrichtung zumindest einen Piezo-Aufnehmer und/oder einen Dehnungsmesstreifen umfasst, mittels dem eine auf zumindest eines der Führungselemente (30A, 30B, 30C, 30C', 30C", 30D, 30D', 30D") und/oder eine zwischen den Führungselementen (30A, 30B, 30C, 30C', 30C", 30D, 30D', 30D") wirkende Kraft erfassbar ist.

5. Setzeinrichtung (10) nach zumindest einem der vorstehenden Ansprüche,
**dadurch gekennzeichnet, dass**
die Detektionseinrichtung zumindest einen Bewegungs- oder Abstandssensor (62) umfasst, mit dem eine Bewegung der Führungseinrichtung (28) und/oder zumindest eines der Führungselemente (30A, 30B, 30C, 30C', 30C", 30D, 30D', 30D") erfassbar ist, insbesondere wobei eine Bewegung und/oder eine Abstandsänderung des zumindest einen der Führungselemente (30A, 30B, 30C, 30C', 30C", 30D, 30D', 30D") relativ zu einer anderen Komponente der Setzeinrichtung (10) und/oder eine Bewegung und/oder eine Abstandsänderung der Führungselemente (30A, 30B, 30C, 30C', 30C", 30D, 30D', 30D") relativ zueinander erfassbar ist.

6. Setzeinrichtung (10) nach zumindest einem der vorstehenden Ansprüche,
**dadurch gekennzeichnet, dass**
die Detektionseinrichtung zumindest eine Schallquelle und zumindest einen Schallsensor umfasst und/oder dass die Detektionseinrichtung zumindest eine Druckluftquelle und zumindest einen Drucksensor (64) umfasst.

7. Setzeinrichtung (10) nach zumindest einem der vorstehenden Ansprüche,
**dadurch gekennzeichnet, dass**
die Führungselemente (30A, 30B, 30C, 30C', 30C", 30D, 30D', 30D") zumindest teilweise, insbesondere vollständig aus einem elektrisch leitfähigem Material gefertigt sind, bevorzugt Metall.

8. Setzeinrichtung (10) nach zumindest einem der vorstehenden Ansprüche,
**dadurch gekennzeichnet, dass**
in Umfangsrichtung benachbarte Führungselemente (30A, 30B, 30C, 30C', 30C", 30D, 30D', 30D") durch zumindest eine Unterbrechung (39) voneinander getrennt sind.

9. Setzeinrichtung (10) nach zumindest einem der vorstehenden Ansprüche,
**dadurch gekennzeichnet, dass**
die Führungselemente (30A, 30B, 30C, 30C', 30C", 30D, 30D', 30D") voneinander elektrisch isoliert sind.

10. Setzeinrichtung (10) nach Anspruch 8,
**dadurch gekennzeichnet, dass**
in der Unterbrechung (39) jeweils zumindest ein Isolierelement (40) angeordnet ist, insbesondere wobei das Isolierelement (40) ein elektrisch isolierendes und/oder elastisches Material umfasst oder vollständig daraus gefertigt ist.

11. Setzeinrichtung (10) nach Anspruch 8 oder 10,
**dadurch gekennzeichnet, dass**
die Detektionseinrichtung zumindest teilweise in der Unterbrechung (39) angeordnet ist und/oder in das Isolierelement (40) integriert ist.

12. Setzeinrichtung (10) nach zumindest einem der vorstehenden Ansprüche,
**dadurch gekennzeichnet, dass**
die Vorspanneinrichtung zumindest ein elastisches Vorspannelement (42, 42A, 42B, 42C), insbesondere zumindest ein in Umfangsrichtung geschlossenes oder ringförmiges elastisches Vorspannelement (42, 42A, 42B, 42C) umfasst, das die Führungselemente (30A, 30B, 30C, 30C', 30C", 30D, 30D', 30D") an ihrer radialen Außenseite in Umfangsrichtung umgibt.

13. Setzeinrichtung (10) nach Anspruch 12,
**dadurch gekennzeichnet, dass**
das Vorspannelement (42, 42A, 42B, 42C) mit zumindest einem der Isolierelemente (40) in Verbindung steht, insbesondere einstückig mit diesem ausgebildet ist, und/oder dass das Vorspannelement (42, 42A, 42B, 42C) und/oder das Isolierelement (40) ein an zumindest eines der Führungselemente (30A, 30B, 30C, 30C', 30C", 30D, 30D', 30D") angeformtes Elastomer umfasst.

14. Setzeinrichtung (10) nach zumindest einem der vorstehenden Ansprüche,
**dadurch gekennzeichnet, dass**
der Detektionseinrichtung eine Steuereinrichtung zugeordnet ist oder dass die Detektionseinrichtung mit einer Steuerrichtung verbunden ist, mit der Signale der Detektionseinrichtung erfassbar und/oder auswertbar sind, um die Anwesenheit, Position und/oder Lage des Elements (22) im Bereich der Führungseinrichtung (28) zu ermitteln.

## Claims

1. A setting device (10) for fastening an element (22) to a workpiece (36) having a guide device (28) which can be brought into mechanical contact with the element (22) and which has an axial hollow space (26) for guiding the element (22), and having an axially movable ram (24) for moving the element (22) in a setting direction through the hollow space (26) of the guide device (28), wherein the guide device (28) has at least one first and one second guide element (30A, 30B, 30C, 30C', 30C", 30D, 30D', 30D"), wherein the guide elements (30A, 30B, 30C, 30C', 30C", 30D, 30D', 30D") bound the axial hollow space (26) and are preloaded by means of a preloading device by a preloading force acting radially inwardly on at least one of the guide elements, in particular all of the guide elements (30A, 30B, 30C, 30C', 30C", 30D, 30D', 30D"), and wherein a detection device is associated with the guide device (28) and a presence, position and/or location of an element (22) in the region of the guide device (28) can be detected by said detection device,
**characterized in that**
the detection device is at least partly integrated in at least one of the guide elements (30A, 30B, 30C, 30C', 30C", 30D, 30D', 30D"); and
**in that** the detection device comprises a first contact element (60) which is provided at an inner side of the first guide element (30A) and a second contact element (60) which is provided at an inner side of the second guide element (30B), with the contact elements (60) being able to be brought at least sectionally into contact with the element (22) on the movement of the element (22) through the hollow space (26), and with an electrical voltage and/or an electrical current being able to be applied between the contact elements (60) by means of the detection device.

2. A setting device (10) in accordance with claim 1,
**characterized in that**
the detection device has an electrical principle of operation, in particular a capacitive, inductive and/or resistive principle of operation, and/or an optical and/or magnetic and/or acoustic principle of operation and/or comprises a force sensor and/or a pressure sensor (64).

3. A setting device (10) in accordance with claim 1 or 2,
**characterized in that**
at least one measurement tap or sensor (46A, 46B, 59A, 59B, 60, 61, 62, 64) of the detection device is arranged in a region of action of the guide device (28), viewed in the setting direction.

4. A setting device (10) in accordance with at least one of the preceding claims,
**characterized in that**
the detection device comprises at least one magnetic field sensor, in particular a Hall sensor, and/or **in that** the detection device comprises at least one measurement coil, in particular with the measurement coil being arranged coaxially to the hollow space (26), and/or **in that** the detection device comprises at least one piezo receiver and/or a strain gauge by means of which a force can be detected that acts on at least one of the guide elements (30A, 30B, 30C, 30C', 30C", 30D, 30D', 30D") and/or that acts between the guide elements (30A, 30B, 30C, 30C', 30C", 30D, 30D', 30D").

5. A setting device (10) in accordance with at least one of the preceding claims,
**characterized in that**
the detection device comprises at least one movement sensor or distance sensor (62) by which a movement of the guide device (28) and/or at least one of the guide elements (30A, 30B, 30C, 30C', 30C", 30D, 30D', 30D") can be detected, in particular with a movement and/or a distance change of the at least one of the guide elements (30A, 30B, 30C, 30C', 30C", 30D, 30D', 30D") relative to a different component of the setting device (10) and/or a movement and/or a distance change of the guide elements (30A, 30B, 30C, 30C', 30C", 30D, 30D', 30D") relative to one another being able to be detected.

6. A setting device (10) in accordance with at least one of the preceding claims,
**characterized in that**
the detection device comprises at least one sound source and at least one sound sensor and/or **in that** the detection device comprises at least one compressed air source and at least one pressure sensor (64).

7. A setting device (10) in accordance with at least one of the preceding claims,
**characterized in that**
the guide elements (30A, 30B, 30C, 30C', 30C", 30D, 30D', 30D") are at least partly, in particular completely, produced from an electrically conductive material, preferably metal.

8. A setting device (10) in accordance with at least one of the preceding claims,
**characterized in that**
guide elements (30A, 30B, 30C, 30C', 30C", 30D, 30D', 30D") adjacent in the peripheral direction are separated from one another by at least one interval (39).

9. A setting device (10) in accordance with at least one of the preceding claims,
**characterized in that**
the guide elements (30A, 30B, 30C, 30C', 30C", 30D, 30D', 30D") are electrically insulated from one another.

10. A setting device (10) in accordance with claim 8,
**characterized in that**
a respective at least one insulation element (40) is arranged in the interval (39), in particular with the insulation element (40) comprising or being completely produced from an electrically insulating and/or elastic material.

11. A setting device (10) in accordance with claim 8 or 10,
**characterized in that**
the detection device is at least partly arranged in the interval (39) and/or is integrated in the insulation element (40).

12. A setting device (10) in accordance with at least one of the preceding claims,
**characterized in that**
the preloading device comprises at least one elastic preloading element (42, 42A, 42B, 42C), in particular at least one elastic preloading element (42, 42A, 42B, 42C) which is closed or of annular form in the peripheral direction and which surrounds the guide elements (30A, 30B, 30C, 30C', 30C", 30D, 30D', 30D") at their radial outer side in the peripheral direction.

13. A setting device (10) in accordance with claim 12,
**characterized in that**
the preloading element (42, 42A, 42B, 42C) is connected to at least one of the insulation elements (40), is in particular formed in one piece therewith; and/or **in that** the preloading element (42, 42A, 42B, 42C) and/or the insulation element (40) can comprise an elastomer molded to at least one of the guide elements (30A, 30B, 30C, 30C', 30C", 30D, 30D', 30D").

14. A setting device (10) in accordance with at least one of the preceding claims,
**characterized in that**
a control device is associated with the detection device; or **in that** the detection device is connected to a control device by which signals of the detection device can be detected and/or evaluated to determine the presence, position and/or location of the element (22) in the region of the guide device (28).

## Revendications

1. Dispositif de pose (10) pour fixer un élément (22) sur une pièce à oeuvrer (36), comprenant un dispositif de guidage (28) qui peut être mis en contact mécanique avec l'élément (22) et qui présente une cavité axiale (26) pour guider l'élément (22), et comprenant un poinçon (24) mobile axialement pour déplacer l'élément (22) dans une direction de pose à travers la cavité (26) du dispositif de guidage (28), le dispositif de guidage (28) présentant au moins un premier et un deuxième élément de guidage (30A, 30B, 30C, 30C', 30C", 30D, 30D', 30D"), les éléments de guidage (30A, 30B, 30C, 30C', 30C", 30D, 30D', 30D") délimitant la cavité axiale (26) et étant précontraints au moyen d'un dispositif de précontrainte par une force de précontrainte agissant radialement vers l'intérieur sur au moins l'un des éléments de guidage, en particulier sur tous les éléments de guidage (30A, 30B, 30C, 30C', 30C", 30D, 30D', 30D"), et un dispositif de détection étant associé au dispositif de guidage (28), permettant de détecter une présence, une position et/ou un emplacement d'un élément (22) dans la zone du dispositif de guidage (28),
**caractérisé en ce que**
le dispositif de détection est intégré au moins partiellement dans l'un au moins des éléments de guidage (30A, 30B, 30C, 30C', 30C", 30D, 30D', 30D"), et
**en ce que** le dispositif de détection comprend un premier élément de contact (60), prévu sur un côté intérieur du premier élément de guidage (30A), et un deuxième élément de contact (60), prévu sur un côté intérieur du deuxième élément de guidage (30B), les éléments de contact (60) pouvant être mis en contact au moins localement avec l'élément (22) lors du déplacement de celui-ci à travers la cavité (26), et une tension électrique et/ou un courant électrique pouvant être appliqué(e) entre les éléments de contact (60) au moyen du dispositif de détection.

2. Dispositif de pose (10) selon la revendication 1,
**caractérisé en ce que**
le dispositif de détection présente un principe de fonctionnement électrique, en particulier un principe de fonctionnement capacitif, inductif et/ou résistif, et/ou un principe de fonctionnement optique et/ou magnétique et/ou acoustique, et/ou comprend un capteur de force et/ou de pression (64).

3. Dispositif de pose (10) selon la revendication 1 ou 2,
**caractérisé en ce que**
au moins une prise de mesure ou un capteur (46A, 46B, 59A, 59B, 60, 61, 62, 64) du dispositif de détection est disposé(e) dans une zone d'action du dispositif de guidage (28), vu dans la direction de pose.

4. Dispositif de pose (10) selon l'une au moins des revendications précédentes,
**caractérisé en ce que**
le dispositif de détection comprend au moins un capteur de champ magnétique, en particulier un capteur à effet Hall, et/ou **en ce que** le dispositif de détection comprend au moins une bobine de mesure, en particulier la bobine de mesure étant disposée coaxialement à la cavité (26), et/ou
**en ce que** le dispositif de détection comprend au moins un capteur piézoélectrique et/ou une jauge de contrainte, permettant de détecter une force agissant sur au moins un des éléments de guidage (30A, 30B, 30C, 30C', 30C", 30D, 30D', 30D") et/ou agissant entre les éléments de guidage (30A, 30B, 30C, 30C', 30C", 30D, 30D', 30D").

5. Dispositif de pose (10) selon l'une au moins des revendications précédentes,
**caractérisé en ce que**
le dispositif de détection comprend au moins un capteur de mouvement ou de distance (62) permettant de détecter un mouvement du dispositif de guidage (28) et/ou d'au moins un des éléments de guidage (30A, 30B, 30C, 30C', 30C", 30D, 30D', 30D"), en particulier un mouvement et/ou une variation de distance d'au moins un des éléments de guidage (30A, 30B, 30C, 30C', 30C", 30D, 30D', 30D") par rapport à un autre composant du dispositif de pose (10) et/ou un mouvement et/ou une variation de distance des éléments de guidage (30A, 30B, 30C, 30C', 30C", 30D, 30D', 30D") les uns par rapport aux autres.

6. Dispositif de pose (10) selon l'une au moins des revendications précédentes,
**caractérisé en ce que**
le dispositif de détection comprend au moins une source sonore et au moins un capteur sonore, et/ou
**en ce que** le dispositif de détection comprend au moins une source d'air comprimé et au moins un capteur de pression (64).

7. Dispositif de pose (10) selon l'une au moins des revendications précédentes,
**caractérisé en ce que**
les éléments de guidage (30A, 30B, 30C, 30C', 30C", 30D, 30D', 30D") sont fabriqués au moins partiellement, en particulier entièrement, en un matériau électriquement conducteur, de préférence en métal.

8. Dispositif de pose (10) selon l'une au moins des revendications précédentes,
**caractérisé en ce que**
des éléments de guidage (30A, 30B, 30C, 30C', 30C", 30D, 30D', 30D") voisins dans la direction circonférentielle sont séparés les uns des autres par au moins une interruption (39).

9. Dispositif de pose (10) selon l'une au moins des revendications précédentes,
**caractérisé en ce que**
les éléments de guidage (30A, 30B, 30C, 30C', 30C", 30D, 30D', 30D") sont isolés électriquement les uns des autres.

10. Dispositif de pose (10) selon la revendication 8,
**caractérisé en ce que**
au moins un élément isolant (40) respectif est disposé dans l'interruption (39), en particulier l'élément isolant (40) comprenant un matériau électriquement isolant et/ou élastique ou étant entièrement fabriqué de celui-ci.

11. Dispositif de pose (10) selon la revendication 8 ou 10,
**caractérisé en ce que**
le dispositif de détection est disposé au moins partiellement dans l'interruption (39) et/ou est intégré dans l'élément isolant (40).

12. Dispositif de pose (10) selon l'une au moins des revendications précédentes,
**caractérisé en ce que**
le dispositif de précontrainte comprend au moins un élément de précontrainte élastique (42, 42A, 42B, 42C), en particulier au moins un élément de précontrainte élastique (42, 42A, 42B, 42C) annulaire ou fermé dans la direction circonférentielle, qui entoure les éléments de guidage (30A, 30B, 30C, 30C', 30C", 30D, 30D', 30D") sur leur côté extérieur radial dans la direction circonférentielle.

13. Dispositif de pose (10) selon la revendication 12,
**caractérisé en ce que**
l'élément de précontrainte (42, 42A, 42B, 42C) est en liaison avec au moins un des éléments isolants (40), en particulier est réalisé d'une seule pièce avec celui-ci, et/ou
**en ce que** l'élément de précontrainte (42, 42A, 42B, 42C) et/ou l'élément isolant (40) comprend un élastomère moulé sur au moins un des éléments de guidage (30A, 30B, 30C, 30C', 30C", 30D, 30D', 30D").

14. Dispositif de pose (10) selon l'une au moins des revendications précédentes,
**caractérisé en ce que**
un dispositif de commande est associé au dispositif de détection, ou **en ce que** le dispositif de détection est relié à un dispositif de commande permettant de détecter et/ou d'évaluer des signaux du dispositif de détection, afin de déterminer la présence, la position et/ou l'emplacement de l'élément (22) dans la zone du dispositif de guidage (28).
